(19) Europäisches Patentamt
European Patent Office
Office européen des brevets

(11) **EP 2 962 998 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
*C03C 3/078* (2006.01)  *F21V 5/04* (2006.01)
*G02B 19/00* (2006.01)

(21) Anmeldenummer: **14175891.2**

(22) Anmeldetag: **05.07.2014**

(54) **Linsen und Beleuchtungssysteme für Tunnel**

Lenses and lighting systems for tunnels

Lentilles et systemes d'illumination pour tunnels

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.01.2016 Patentblatt 2016/01**

(60) Teilanmeldung:
**17204599.9 / 3 309 134**

(73) Patentinhaber: **Swareflex GmbH**
**6134 Vomp (AT)**

(72) Erfinder: **Flir, Anton**
**6134 Vomp (AT)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**CN-U- 201 973 664    US-A1- 2013 276 880**

• **Anonymous: "led tunnel light glass lens", , 23. April 2014 (2014-04-23), XP055160671, Gefunden im Internet: URL:http://www.weiku.com/products/18600301/led_tunnel_light_glass_lens.html [gefunden am 2015-01-08]**

**Beschreibung**

**GEBIET DER ERFINDUNG**

Die Erfindung befindet sich auf dem Gebiet der Verkehrstechnik und betrifft speziell ausgestaltete Linsen zum Einsatz in Beleuchtungsvorrichtungen für Tunnelanlagen sowie die Beleuchtungsvorrichtungen, die die Linsen enthalten.

**STAND DER TECHNIK**

Im Straßenverkehr stellen Tunnel besonders neuralgische Punkte mit hohem Gefahrenpotential dar. Über teilweise viele Kilometer gibt es keine Möglichkeit, die Röhren zu verlassen oder umzudrehen. Das Fahren ist monoton, die Enge und Abgeschlossenheit führt bei vielen Menschen zu Unwohlsein, alles Faktoren, die zu einem höheren Unfallrisiko als beispielsweise im innerstädtischen Bereich oder auf Autobahnen führen können. Ereignet sich ein Unfall mit einer Havarie, bilden sich wegen der fehlenden Abflussmöglichkeiten sehr rasch lange Staus, die über Stunden anhalten können. Für die Konstrukteure und Betreiber von Tunnelanlagen ist es daher ein essentielles Bedürfnis, ihre Anlagen so sicher wie möglich zu machen. Ein wichtiges Element dabei stellt die richtige Beleuchtung des Tunnels dar.

Auf den ersten Blick mag dies trivial anmuten, denn die Gleichung könnte lauten, je mehr und je hellere Lampen umso besser die Beleuchtung und so geringer das Unfallrisiko. Doch einmal abgesehen von der Frage des Energieverbrauchs stellt sich in der Praxis sehr schnell heraus, dass die besagte Gleichung nicht aufgeht. Viel hilft nicht immer viel.

Dazu muss man sich vor Augen führen, dass Beleuchtungssituationen sehr unterschiedlich sein können. Wird auf einem Parkplatz beispielsweise eine direkte Beleuchtungsstärke und eine homogene Ausleuchtung über möglichst die gesamte Fläche gewünscht, kommt es im Tunnel auf die Leuchtdichteverteilung und die daraus resultierenden Größen wie Längsgleichmäßigkeit, Gleichmäßigkeit und mittlere Leuchtdichte an. Weitere Parameter sind die Höhe der Tunnel sowie der gewünschte Abstand der Lichtpunkte, die ebenfalls Einfluss auf die Art der Beleuchtungsvorrichtungen haben.

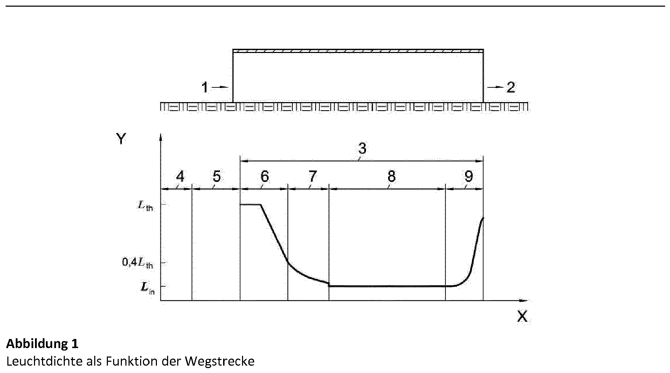

In einem Tunnel kommt es darauf an, bestimmte Flächen hinreichend auszuleuchten und andere gerade nicht zu beleuchten. Die Anforderungen unterscheiden sich dabei auch noch im Tunnel selbst. So wird bei der Einfahrt in einen Tunnel eine andere Lichtverteilung benötigt wie im Tunnel selbst. In Abbildung 1 wird die Leuchtdichte in einem Tunnel als Funktion der Strecke wiedergegeben. Dabei bedeuten:

| | |
|---|---|
| X | Strecke |
| Y | Leuchtdichte |
| 1 | Tunneleinfahrt |
| 2 | Tunnelausfahrt |
| 3 | Tunnelstrecke |
| 4 | Freise Sicht |
| 5 | Annäherungsstrecke |
| 6 | Einsichtsstrecke |
| 7 | Übergangsstrecke |
| 8 | Tunnelinnenstrecke |
| 9 | Ausfahrtstrecke |

Eine solche asymmetrische oder nicht-homogene Beleuchtung schafft man durch spezielle Linsen, die das Licht dahin lenken, wo es benötigt wird. Besonders relevant ist dabei der Beleuchtungsverlauf in den Abschnitten 6 und 7.

Aus der Koreanischen Patentschrift KR 10 1308 092 B1 (KOREA EXPRESSWAY) ist eine Vorrichtung zur Tunnelbeleuchtung bekannt, bei der man Reflexionsfolien an beiden Tunnelseiten anbringt und diese indirekt durch LED beleuchtet.

Gegenstand der EP 1248129 B1 (THORNE EUROPHANE) ist ein System zur Beleuchtung von Tunneln umfassend eine Beleuchtungseinrichtung, welche im Bereich der Seitenwände des Tunnels angeordnet ist. Die Beleuchtungsanordnung weist erste Beleuchtungsmittel auf, die dazu ausgebildet sind, Licht unter einem flachen horizontalen Winkel streifend auf die Bodenfläche des Tunnels abzugeben, sowie zweite Beleuchtungsmittel, die dazu ausgebildet sind, Licht streifend auf die Seitenwand des Tunnels zu richten, an der die Beleuchtungseinrichtung angeordnet ist. Mit den ersten Beleuchtungsmitteln kann ein erster Lichtkegel gebildet werden, mit dem die Fahrbahn beleuchtet wird, mit den zweiten Beleuchtungsmitteln ein zweiter Lichtkegel, der zur Beleuchtung der entsprechenden Seitenwand dient.

Die erste Aufgabe der Erfindung hat somit darin bestanden, Tunnel mit Höhen von etwa 4 bis etwa 10 Metern und Lichtpunktabständen von etwa 8 bis etwa 20 Meter entsprechend den Vorgaben der DIN 67524-1 auszuleuchten, d.h.

(a) eine Längsgleichmäßigkeit auf Fahrbahn und Tunnelwand $U_i$ von mindestens 0,6,

(b) eine Gleichmäßigkeit $U_0$ von mindestens 0,4,

(c) eine Blendung $T_i$ von kleiner oder gleich 15 sowie

(d) eine mittlere Leuchtdichte an der Wand entsprechend mindestens 50 % der mittleren Leuchtdichte auf der Fahrbahn sicherzustellen. Die Definition der angegebenen Größen findet sich in der oben genannten Norm, deren Inhalt auf dem Wege der Bezugnahme voll inhaltlich eingeschlossen wird.

Ein ebenfalls ganz erhebliches Problem besteht darin, dass es in Tunneln zu einer erhöhten Konzentration von Abgasen, speziell Schwefeldioxid, Säurenebeln und dergleichen kommt. Ebenfalls wird ständig Reifenabrieb hochgewirbelt. Diese Faktoren beeinträchtigen die Wirkung der Beleuchtungsvorrichtung ganz erheblich, wobei es nicht allein um Verschmutzung geht, sondern auch um chemische Prozesse, die die Leuchten beschädigen.

Somit hat eine weitere Aufgabe der vorliegenden Erfindung darin bestanden, Linsen und diese enthaltenden Beleuchtungsvorrichtungen zur Verfügung zu stellen, die gegenüber den genannten Umwelteinflüssen möglichst lange beständig sind.

## BESCHREIBUNG DER ERFINDUNG

Gegenstand der Erfindung sind optische Linsen mit mindestens einer Lichtaustrittsfläche in ellipsoidartiger Freiform, wobei die Unterseiten planar ausgeformt und mit einer optisch relevanten Ausnehmung zur Aufnahme einer Lichtquelle versehen sind bestehend aus einem Glas

(a) der folgenden Zusammensetzung:

(a1) 55 bis 65 Gew.-% vierwertige Metalloxide

(a2) 10 bis 23 Gew.-% zweiwertige Metalloxide

(a3) 12 bis 22 Gew.-% einwertige Metalloxide und mit der Maßgabe, dass sich die Mengenangaben zu 100 Gew.-% ergänzen, sowie

(b) einem Brechungsindex $n_D$ (gemessen bei 589 nm) von 1,5 bis 1,6.

Überraschenderweise wurde gefunden, dass eine Kombination von spezieller Linsengeometrie und Beschaffenheit des Glases das eingangs geschilderte komplexe Anforderungsprofil voll umfänglich löst.

## GEOMETRIE DER LINSEN

Als optische Linsen bezeichnet man transparente optische Bauelemente mit mindestens zwei lichtbrechenden Flächen, von denen mindestens eine Fläche konvex oder konkav gewölbt ist.

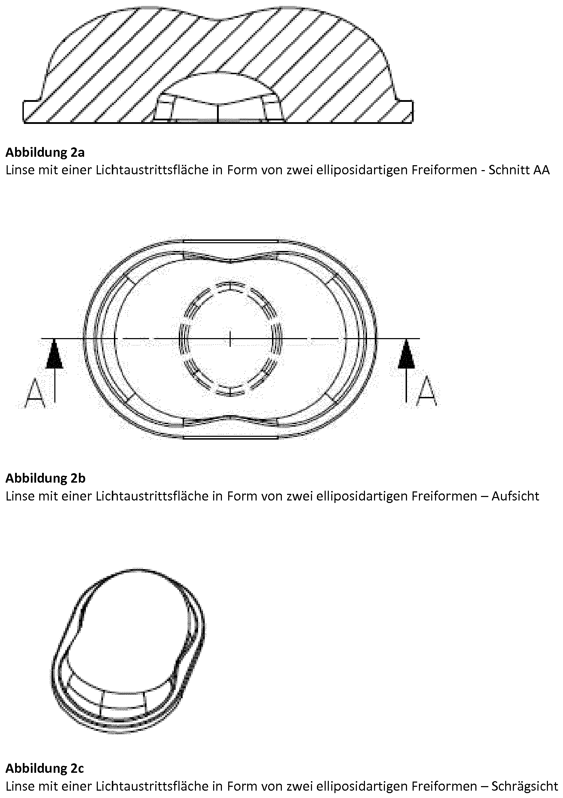

Die Linsen der vorliegenden Erfindung weisen in einer ersten Ausführungsform nur eine Lichtaustrittsfläche in Form einer elliposidartigen Freiform auf, d.h. sie sind einkernig und verfügen nur über eine einzige Kugelhaube. Die Linsen können jedoch in eine alternativen Ausführungsform auch Lichtaustrittsflächen in Form von zwei, drei, vier oder noch weitere ellipsoiden Freiformen aufweisen, also 2, 3, 4 und mehr Kugelhauben besitzen. Eine solche Linse wird exemplarisch in den **Abbildungen 2a** (Schnitt A-A), **2b** (Aufsicht) und **2c** (Schrägansicht) dargestellt. Mehrkernige Linsen sind dann bevorzugt, wenn das Licht von einer Lichtquelle auf unterschiedliche Flächen mit jeweils definierter Lichtstärke gelenkt werden soll.

Den Abbildungen ist ebenfalls zu entnehmen, dass die Linsen etwa mittig angeordnet eine optisch relevante Ausnehmung aufweisen, die von Form und Größe so dimensioniert ist, dass sie die Lichtquelle - beispielsweise eine LED - aufnehmen kann. Die Ausnehmung ist optisch relevant, d.h. sie ist unabdingbar für die Lichtstreuung und weist dabei vorzugsweise -jedoch nicht zwingend - einen kreisförmigen oder ovalen Durchmesser auf, insbesondere handelt es sich um ein kartesisches Oval.

Die optischen Linsen der vorliegenden Erfindung weisen vorzugsweise einen Durchmesser entlang der längsten Achse (x-Achse) von etwa 10 bis etwa 50 mm, vorzugsweise etwa 15 bis etwa 30 mm und insbesondere etwa 18 bis etwa 28 mm auf. Der Durchmesser entlang der kürzeren y und z-Achsen liegt üblicherweise bei etwa 8 bis etwa 25 mm und insbesondere bei etwa 9 bis 20 mm.

Besonders bevorzugt sind optische Linsen, die in Richtung der optischen Achse eine Höhe von etwa 9 bis etwa 20 mm und insbesondere etwa 12 bis etwa 15 mm aufweisen, wobei vorzugsweise der Abstand der Lichteintritts- zur Lichtaustrittsfläche etwa 2 bis etwa 10 mm und insbesondere etwa 5 bis etwa 8 mm betragen sollte.

Wie anspruchsgemäß ausgeführt, handelt es sich bei den optischen Linsen der vorliegenden Erfindung um solche die eine planare Unterseite aufweisen. Das bedeutet, dass die Freiform etwa auf halber Höhe in Richtung der optischen Achse durchtrennt ist, so dass eine glatte Schnittfläche entsteht. Diese ist in einer weiteren bevorzugten Ausführungsform der Erfindung mit einem umlaufenden Rand oder Flansch ausgestattet, wie dies auch in **Abbildung 2a** dargestellt ist. Auf diese Weise wird die Auflagefläche der Linse auf den Träger vergrößert, was ein dichtes Verkleben wesentlich erleichtert.

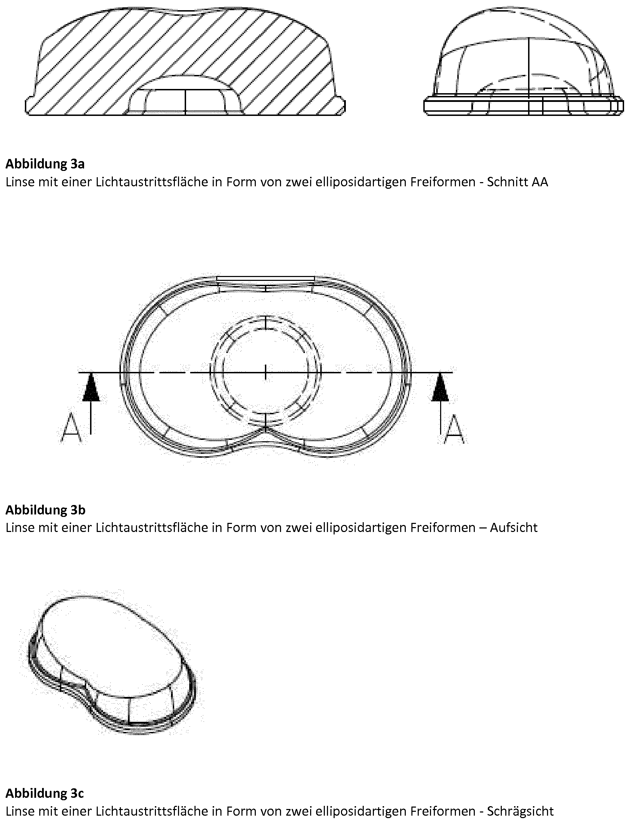

Eine alternative Ausführungsform ist in den **Abbildungen 3a, 3b und 3c** wiedergegeben: auch hier liegt eine Linse vor, bei der die Lichtaustrittsfläche zwei ellipsoidartige Freiformen aufweist. Die beiden Kugelhauben sind dabei bezüglich ihrer Mittelpunkte so nahe aneinander gerückt, dass beinahe wieder eine einzige Kugelhaube resultiert.

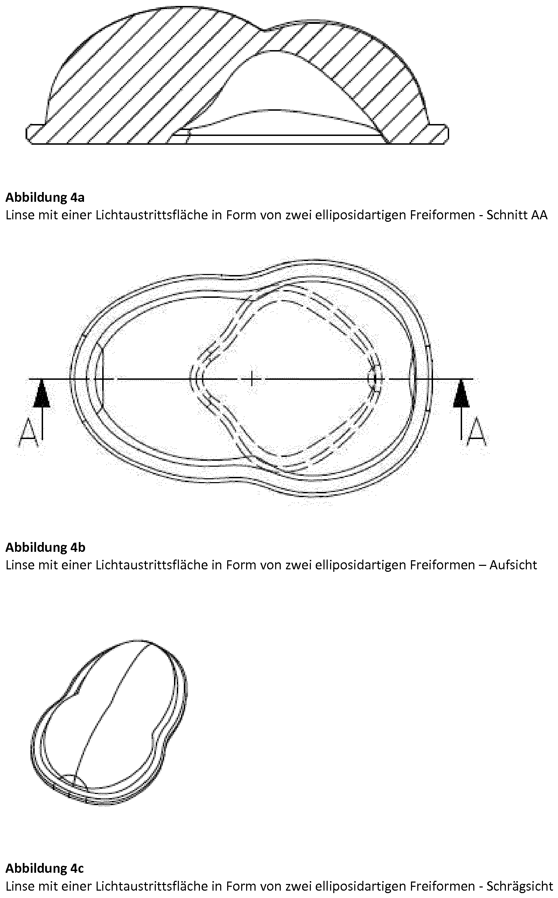

Eine dritte Beispielform zeigen die **Abbildungen 4a, 4b und 4c**, nämlich wiederum eine Linse, bei der die Lichtaustrittsfläche zwei ellipsoidartige Freiformen aufweist, diesmal jedoch mit zwei Kugelhauben unterschiedlicher Größe.

Der Flansch kann dabei in seiner einfachsten Form der Geometrie der Linse folgen, also im Fall einer einkernigen Linse mit nur einer Kugelhaube, bei der die plankonvexe Fläche eine Ellipse darstellt, diese nachbilden. Liegt beispielsweise eine zweikernige Linse mit eben zwei Kugelhauben vor, dann weist die plane Fläche die Form einer Acht auf. Der Flansch kann diese Form nun ebenfalls nachbilden oder aber alternativ wieder eine komplette Ellipse ausbilden, welche die Achterform einschließt. Diese Ausführungsform ist bevorzugt, weil dadurch die Auflagefläche der Linse noch einmal etwas vergrößert wird. Dies wird in den **Abbildungen 2a und 2b** noch einmal illustriert.

In einer dritten Ausführungsform kann der Flansch eine Positionierungshilfe aufweisen, beispielsweise einseitig plan geschliffen sein, d.h. während er der Geometrie der Linse an drei Seiten folgt ist er an der vierten Seite gerade ausgeprägt (vgl. auch **Abbildungen 2b und 3c**). Dies hat den Vorteil, dass man bei den Linsen "rechts" und "links" unterscheiden kann und das richtige Positionieren einfacher wird. Alternativ kann der Flansch mit einer Kerbe oder einer innerhalb oder senkrecht zur Planebene mindestens eine Ausstülpung oder Einstülpung auweisen.

Der umlaufende Flansch kann eine Breite von etwa 1 bis etwa 2 mm und eine Stärke von ebenfalls etwa 1 bis etwa 2 mm aufweisen.

## GLASZUSAMMENSETZUNG DER LINSEN

Ein weiteres kritisches Merkmal der Erfindung betrifft die Zusammensetzung der Gläser, aus denen die Linsen bestehen. Dabei ist als erstes anzumerken, dass schon der Umstand, dass die Linsen überhaupt aus Glas und nicht wie inzwischen üblich aus Kunststoff bestehen, für den technischen Erfolg der Erfindung mitverantwortlich ist. Nur mit Glaslinsen lassen sich so präzise Lichteinstrahlungen erreichen und nur mit Glaslinsen können auch die Anforderungen an die Beständigkeit erfüllt werden.

Es ist weiterhin erforderlich, dass die Gläser Oxide von vier-, zwei- und einwertigen Metallen aufweisen. Die vierwertigen Metalloxide sind dabei ausgewählt aus der Gruppe, die gebildet wird von Siliziumdioxid, Titandioxid und Zirkondioxid, sowie deren Mischungen.

Die zweiwertigen Metalloxide sind ausgewählt aus der Gruppe, die gebildet wird von Calciumoxid, Magnesiumoxid und Zinkoxid sowie deren Mischungen.

Die einwertigen Metalloxide sind ausgewählt aus der Gruppe, die gebildet wird von Natriumoxid, Kaliumoxid und Lithiumoxid sowie deren Mischungen.

Vorzugsweise sind die einzelnen Metalloxide in jeder der drei Gruppen in etwa gleichen Mengen enthalten. Ausnahme bildet die Gruppe der vierwertigen Metalloxide, in denen naturgemäß die Menge an Siliziumdioxid deutlich überragt. Es ist des Weiteren vorteilhaft, wenn die Gläser alle neuen ausdrücklich genannten Oxide enthalten.

Konkrete Beispiele für geeignete Glaszusammensetzungen sind in **Tabelle 1** offenbart. Besonders bevorzugte Zusammensetzungen umfassen:

(a1) etwa 58 bis etwa 63 Gew.-% vierwertige Metalloxide,

(a2) etwa 14 bis etwa 22 Gew.-% zweiwertige Metalloxide,

(a3) etwa 14 bis etwa 20 Gew.-% einwertige Metalloxide,

mit der Maßgabe, dass sich die Mengenangaben zu 100 Gew.-% addieren.

Eine weiter kritische Größe stellt der Brechungsindex $n_D$ dar, der vorzugsweise einen Wert von 1,55 bis 1,58 aufweist.

Vorteilhafterweise besitzen die erfindungsgemäßen Linsen eine Dichte von etwa 2,65 bis etwa 2,75 g/cm$^3$ und insbesondere von etwa 2,68 bis 2,73 g/cm$^3$.

Ebenfalls bevorzugt sind Linsen, die eine definierte Vickershärte von etwa 600 bis etwa 650 HV 0,1/20 aufweisen.

**GLASHERSTELLUNG**

Die Herstellung der speziellen Gläser der vorliegenden Erfindung kann in an sich bekannter Weise erfolgen; kritisch ist allein die Mischung der Einsatzstoffe, wie sie oben angegeben ist. Die Herstellung umfasst daher zunächst die Rauhschmelze, die das Einschmelzen des Gemenges und seine Homogenisierung umfasst, gefolgt von der Läuterung, bei die Gase ausgetrieben werden und schließlich das Abstehen, bei dem die Schmelze auf die gewünschte Formgebungstemperatur abgekühlt wird.

Das Gemenge wird der Schmelzwanne mit einer Einlegemaschine am Einlegevorbau, dem Doghouse, aufgegeben. Da das Gemenge eine geringere Dichte als die Glasschmelze besitzt, schwimmt dieses auf der Schmelze und bildet den sogenannten Gemengeteppich. Bei Temperaturen von ca. 1400 °C und mehr schmelzen die verschiedenen Bestandteile langsam auf. Einige der Gemengebestandteile können zusammen Eutektika bilden und bereits bei wesentlich geringeren Temperaturen erste Schmelzphasen bilden. Die Konvektion im Glasbad bewirkt einen kontinuierlichen Abtransport von Material, das sich vom Gemengeteppich löst. Gleichzeitig bewirkt sie eine Erwärmung des Gemenges. Somit erzeugt sie sowohl eine thermische, als auch eine chemische Homogenität der Schmelze. Diese kann durch ein Bubbling, die Eindüsung von Luft oder Gasen in die Schmelze, unterstützt werden.

Im Läuterbereich, der dem Schmelzbereich unmittelbar folgt, und häufig auch durch einen Wall in der Schmelze von diesem getrennt ist, werden in der Schmelze verbliebene Gase ausgetrieben. Zu diesem Zweck wird dem Gemenge zuvor ein sogenanntes Läutermittel zugegeben. Dieses Läutermittel zersetzt sich bei einer bestimmten Temperatur unter Gasbildung. Aufgrund von Partialdruckdifferenzen diffundieren nun Gase aus der Schmelze in die Läutermittel-Gasblasen ein, welche dadurch anwachsen und aufsteigen. Um diesen Prozess in wirtschaftlich vertretbaren Zeiten durchführen zu können, herrschen im Läuterteil einer Glasschmelzwanne ähnlich hohe Temperaturen wie im Schmelzteil, weil eine zu hohe Viskosität der Schmelze das Aufsteigen der Gasblasen stark verlangsamen würde. Da die Läuterung bestimmend für die Glasqualität ist, gibt es vielfältige unterstützende Maßnahmen.

Dem Läuterbereich schließt sich die baulich klar getrennte Arbeitswanne an. Da für die Formgebung niedrigere Temperaturen als zur Schmelze und Läuterung nötig sind, muss das Glas vorher abstehen. Daher spricht man auch von Abstehwanne. Der Kanal, der Schmelzwanne und Arbeitswanne verbindet, heißt Durchlass und arbeitet nach dem Siphonprinzip. Bei Flachglaswannen sind Schmelz- und Arbeitswanne nur durch eine Einschnürung getrennt, da ein Durchlass eine optische Unruhe im Fertigprodukt entstehen ließe.

Von der Arbeitswanne fließt das Glas weiter zum Entnahmepunkt, wo dann die Formgebung stattfindet. Bei der Produktion von Hohlglas sind dieses die Speiser oder Feeder. Hier werden Tropfen erzeugt, die über ein Rinnensystem in darunter stehende Glasmaschinen geleitet werden.

In jedem Glasgegenstand entstehen bei der Formgebung mechanische Spannungen als Folge einer Zwangsformgebung oder Dehnungsunterschiede im Material aufgrund von Temperaturgradienten. Diese Spannungen lassen sich mit optischen Spannungsprüfern unter polarisiertem Licht geometrisch messen (Spannungsdoppelbrechung). Die Spannungsanfälligkeit hängt vom Ausdehnungskoeffizienten des jeweiligen Glases ab und muss thermisch ausgeglichen werden.

Für jedes Glas lässt sich ein Kühlbereich festlegen, welcher von der so genannten oberen und unteren Kühltemperatur begrenzt wird. Die Lage dieser Temperaturen definiert sich nach der Viskosität, so ist die obere Kühltemperatur diejenige Temperatur bei der das Glas eine Viskosität von $10^{12}$ Pas besitzt. Bei der unteren Kühltemperatur liegt eine Viskosität 10 Pas vor. In der Regel erstreckt sich der Kühlbereich für die Gläser der vorliegenden Erfindung zwischen 590 °C und 450 °C. Die Spannungen verringert man durch Tempern, also durch definiertes langsames Abkühlen im Kühlbereich, da bei den hier vorherrschenden Viskositäten eine Spannungsrelaxation gerade noch möglich ist und bleibende Spannungen im Glaskörper vermieden werden.

Die Zeit, in der ein Glasgegenstand den Kühlbereich durchlaufen kann, hängt maßgeblich von der je nach Glasart zu überbrückenden Temperatur und der Stärke (Dicke) des Gegenstands ab. Im Hohlglasbereich sind dies zwischen 30 und 100 Minuten.

An diesen Vorgang kann sich die Veredlung der Glasoberfläche ansprechen. Unter einer Oberflächenveredelung versteht man sowohl das Aufbringen von Schichten als auch das Abtragen von Schichten, sowie das Modifizieren der Struktur oder der Chemie der Glasoberfläche. Sinn und Zweck solcher Maßnahmen ist die Verbesserung der bestehenden Gebrauchseigenschaften eines Glasgegenstandes oder die Erzeugung neuer Anwendungsgebiete für einen Glasgegenstand. Durch chemische und physikalische Gasphasenabscheidung können feinste Metallbeschichtungen aufgebracht werden. Die Beschichtung mit dielektrischem Material, das selbst durchsichtig ist, aber einen vom Glasträger abweichenden Brechungsindex aufweist, ermöglicht sowohl Verspiegelungen als auch eine Entspiegelung. Dies wird bei der Herstellung von Brillengläsern und Linsen für Fotoapparate eingesetzt, um störende Reflexionen zu vermindern. Für wissenschaftliche Zwecke werden Schichten hergestellt, die mehr als 99,9999 % des einfallenden Lichts einer bestimmten Wellenlänge reflektieren. Umgekehrt kann auch erreicht werden, dass 99,999 % des Lichts die Oberfläche passieren

Durch Sandstrahlen oder Behandlung mit Flusssäure kann die Oberfläche so weit aufgeraut werden, dass das Licht stark gestreut wird. Es erscheint dann milchig und nicht mehr durchsichtig, jedoch wird weiterhin nur sehr wenig Licht absorbiert. Daher wird diese Technik häufig für Lampenschirme oder blickdichte Fenster angewandt (siehe auch Satinieren). Ebenfalls mit Flusssäure lässt sich die Oberfläche eines Glases säurepolieren. Dabei werden die beschädigten Oberflächenschichten abgetragen was zu defektfreien Oberfläche und somit einer erhöhten Festigkeit des Glasgegenstandes führt. Eine weitere häufig eingesetzte Oberflächenveredelungsmethode ist die Entalkalisierung der Glasoberfläche. Durch Reaktion der heißen Glasoberfläche mit aggressiven Gasen (z. B. HCl oder $SO_2$) bilden sich mit den Alkalien aus dem Glas Salze, welche sich auf der Glasoberfläche abscheiden. Das an Alkalien verarmte Glas zeigt infolge dessen eine erhöhte chemische Beständigkeit.

## GEWERBLICHE ANWENDBARKEIT

Ein weiterer Gegenstand der Erfindung betrifft ein Beleuchtungselement, umfassend oder bestehend aus einem Träger, mindestens einer Lichtquelle sowie mindestens einer optischen plankonvexen Linse, wie sie vorstehend beschrieben worden ist.

Ein letzter Gegenstand der Erfindung bezieht sich auf die Verwendung der erfindungsgemäßen optischen Linsen und/oder der Beleuchtungselemente zur Beleuchtung in Außenanwendungen, beispielsweise für die Straßenbeleuchtung, die Flugvorfeldbeleuchtung, die Beleuchtung von Parkhäusern und insbesondere die Tunnelbeleuchtung.

## LICHTQUELLEN

Die Lichtquellen können in diesem Zusammenhang LED, OLED, LET oder OLET darstellen.

## LED

LED, auch als Leuchtdioden bezeichnet, stellen lichtemittierende HalbleiterBauelemente dar, deren elektrische Eigenschaften denen einer Diode entspreche. Fließt durch die Diode elektrischer Strom in Durchlassrichtung, so strahlt sie Licht, IR-Strahlung und UV-Strahlung mit einer vom Halbleitermaterial und dessen Dotierung anhängigen Wellenlänge ab.

Der Halbleiterkristall vieler Leuchtdioden ist auf den Boden einer kegelförmigen Vertiefung in einem Metallhalter gelötet. Die Innenseiten der Vertiefung wirken als Reflektor für das aus den Seiten des Kristalls austretende Licht. Die Lötstelle bildet einen der beiden elektrischen Anschlüsse des Kristalls. Gleichzeitig nimmt sie die Abwärme auf, die entsteht, weil der Halbleiterkristall nur einen Teil der elektrischen Leistung in Licht umsetzt. Der Halter mit dem Reflektor ist bei bedrahteten Leuchtdioden als Draht mit rechteckigem Querschnitt ausgeführt, der als elektrischer Anschluss dient. Anders als sonst bei Elektronikbauteilen üblich besteht der Anschlussdraht nicht aus verzinntem Kupfer, sondern aus verzinntem Stahl. Die Wärmeleitfähigkeit von Stahl ist vergleichsweise gering. Dadurch wird der Halbleiterkristall beim Einlöten des Bauteils in eine Leiterplatte nicht durch Überhitzung zerstört. Die Oberseite des Kristalls ist nur durch einen dünnen Bonddraht elektrisch mit dem zweiten Stahlanschlussdraht verbunden, damit der Anschluss nur sehr wenig der lichtemittierenden Oberfläche verdeckt.

Hochleistungs-Leuchtdioden (H-LED) werden mit höheren Strömen als 20 Milliampere betrieben. Es entstehen besondere Anforderungen an die Wärmeableitung, die sich in speziellen Bauformen ausdrücken. Die Wärme kann über die Stromzuleitungen, die Reflektorwanne oder in den Leuchtdiodenkörper eingearbeitete Wärmeleiter abgeführt werden.

Weitere geeignete LED-Ausführungen, die im Sinne der vorliegenden Erfindung als Lichtquellen eingesetzt werden können, umfassen das direkte Drahtbonden des Leuchtdioden-Chips auf der Platine (*chip on board*) und der spätere Verguß mit Silikonmassen.

Die als Lichtquellen eingesetzten LED können auch mehrfarbig sein. Mehrfarbige Leuchtdioden bestehen aus mehreren (zwei oder drei) Dioden in einem Gehäuse. Meist haben sie eine gemeinsame Anode oder Kathode und einen Anschluss für jede Farbe. Bei einer Ausführung mit zwei Anschlüssen sind zwei Leuchtdioden-Chips antiparallel geschaltet. Je nach Polarität leuchtet die eine oder andere Diode. Eine quasi stufenlose Farbveränderung kann man über ein variables Pulsbreitenverhältnis eines geeigneten Wechselstroms realisieren.

Der prinzipielle Aufbau der Leuchtdioden der Erfindung entspricht dem einer pn-Halbleiterdiode; Leuchtdioden besitzen daher die gleichen Grundeigenschaften wie diese. Ein großer Unterschied besteht in dem verwendeten Halbleitermaterial. Während nichtleuchtende Dioden aus Silizium, seltener aus Germanium oder Selen hergestellt werden, ist das Ausgangsmaterial für Leuchtdioden ein direkter Halbleiter, meist eine Galliumverbindung als III-V-Verbindungshalbleiter.

Wird an eine Halbleiterdiode eine Spannung in Durchlassrichtung angelegt, wandern Elektronen von der n-dotierten Seite zum p-n-Übergang. Nach Übergang zur p-dotierten Seite geht das Elektron dann in das energetisch günstigere Valenzband über. Dieser Übergang wird Rekombination genannt, denn er kann auch als Zusammentreffen von einem Elektron im Leitungsband mit einem Defektelektron (Loch) interpretiert werden. Die bei der Rekombination frei werdende Energie kann in einem direkten Halbleiter als Licht (Photon) abgegeben werden.

Neben der direkten strahlenden Rekombination ist auch die Beteiligung von Exzitonen und Phononen möglich, was zu etwas weniger energiereicher Strahlung und zu einer Verschiebung des emittierten Lichtes in den längerwelligen Bereich führt. Dieser Mechanismus spielt insbesondere bei exzitonischer Emission in grünen Galliumphosphid-Leuchtdioden eine Rolle.

Die Bandstruktur des Halbleiters bestimmt unter anderem das Verhalten der Energieübertragung beim Übergang eines Elektrons vom Leitungs- ins Valenzband und entgegengesetzt. Bei den LED, die im Rahmen der vorliegenden Erfindung geeignet sind, kommen ausschließlich direkte Halbleiter in Betracht. Diese, zeichnen sich durch einen "direkten Bandübergang" aus, was bedeutet, dass die Elektronen am unteren Rand des Leitungsbands (Leitungsbandminimum) und am oberen Ende des Valenzbands (Valenzbandmaximum) denselben Impuls haben. Damit ist ein direkter Übergang des Elektrons unter Aussendung eines Photons (Licht) möglich, ohne dass ein Phonon zur Impulserhaltung beteiligt sein muss. Die Quantenausbeute des direkten Halbleiters GaAs liegt bei ca. 0.5, beim indirekten Halbleiter Si nur bei etwa $1.10^{-5}$.

Die Energie des emittierten Photons ist gleich der Energie der Bandlücke, also dem energetischen Abstand zwischen Leitungs- und Valenzband,

$$\lambda(W_{\mathrm{D}}) = \frac{h \cdot c}{W_{\mathrm{D}}} \qquad \text{mit} \quad W_{\mathrm{D}} = E'' - E'$$

wobei $\lambda_{(WD)}$ die Wellenlänge des emittierten Lichtes, h das Planck'sche Wirkungsquantum, c die Lichtgeschwindigkeit und $W_D$ die Arbeit darstellt.

Die Größe der Bandlücke, also der Energielücke **E''-E'** bestimmt die Energie, das heißt, die Frequenz, Wellenlänge bzw. Farbe, des ausgesandten Lichtes. Sie lässt sich über die chemische Zusammensetzung des Halbleiters steuern. So verändert der Austausch von Atomen im Kristallgitter den kristallinen/molekularen Aufbau des Materials, u.a. seine Gitterparameter oder sogar seine Gitterstruktur. Beispielsweise hat der Halbleiter Galliumarsenid einen direkten Bandabstand von 1,4 eV, entsprechend einer Wellenlänge von 885 nm, d.h. im Nah-IR-Bereich. Die Zugabe von Phosphor vergrößert den Bandabstand, was das ausgesandte Licht energiereicher macht, wobei die Wellenlänge abnimmt und die Farbe von Infrarot zu Rot und Gelb übergeht. Durch die Zunahme von Phosphor im Kristall verformt sich jedoch auch das Leitungsband. Wenn Phosphor 50 Prozent der Arsen-Atome ersetzt, liegt der Bandabstand zwar bei fast zwei Elektronenvolt, was einer Strahlung von 650 nm (Rot) entspricht, dafür hat sich die Bandstruktur so verschoben, dass keine direkten Strahlungsübergänge mehr beobachtet werden, wie im Beispiel rechts gezeigt. Die Energie der Bandlücke spiegelt sich auch in der Höhe der Durchlassspannung der Diode wider. Bei langwelligem Licht liegt sie bei ca. 1.5 V, bei blauem Licht bei 3 V.

Durch die gezielte Auswahl der Halbleitermaterialien und der Dotierung können die Eigenschaften des erzeugten Lichtes variiert werden. Vor allem der Spektralbereich und die Effizienz lassen sich so beeinflussen:

• Aluminiumgalliumarsenid (AlGaAs) - rot (665 nm) und infrarot bis 1000 nm Wellenlänge

• Galliumarsenidphosphid (GaAsP) und Aluminiumindiumgalliumphosphid (AlInGaP)-rot, orange und gelb

• Galliumphosphid (GaP)-grün

• Siliziumkarbid (SiC) - erste kommerzielle blaue LED;

• Zinkselenid (ZnSe) - blauer Emitter;

• Indiumgalliumnitrid (InGaN)/Galliumnitrid (GaN) - Ultraviolett, Violett, blau und grün;

• Weiße LEDs, die im Sinne der vorliegenden Erfindung bevorzugt werden, sind meistens blaue LEDs mit einer davor befindlichen Lumineszenzschicht, die als Wellenlängen-Konverter wirkt.

**OLED**

Eine besonders bevorzugte Lichtquelle im Sinne der Erfindung sind OLED. Dabei handelt es sich um organische Leuchtdioden, genauer gesagt um leuchtende Dünnschichtbauelemente aus organischen halbleitenden Materialien, das sich von den anorganischen Leuchtdioden (LED) dadurch unterscheiden, dass die elektrische Stromdichte und Leuchtdichte geringer und keine einkristallinen Materialien erforderlich sind. Im Vergleich zu herkömmlichen (anorganischen) Leuchtdioden lassen sich organische Leuchtdioden daher in Dünnschichttechnik kostengünstiger herstellen. OLEDs sind aus mehreren organischen Schichten aufgebaut. Dabei wird meist auf die Anode, bestehend aus Indium-Zinn-Oxid (ITO), die sich auf einer Glasscheibe befindet, eine Lochleitungsschicht (*hole transport layer*, HTL) aufgebracht. Zwischen ITO und HTL wird - abhängig von der Herstellungsmethode - oft noch eine Schicht aus PEDOT/PSS aufgebracht, die zur Absenkung der Injektionsbarriere für Löcher dient und die Eindiffusion von Indium in den Übergang verhindert. Auf die HTL wird eine Schicht aufgebracht, die entweder den Farbstoff enthält (ca. 5-10 %) oder - eher selten -vollständig aus dem Farbstoff besteht, z. B. Aluminium-tris(8-hydroxychinolin), Alq3. Diese Schicht bezeichnet man als Emitterschicht (*emitter layer*, EL). Auf diese wird optional noch eine Elektronenleitungsschicht (*electron transport layer*, ETL) aufgebracht. Zum Abschluss wird eine Kathode, bestehend aus einem Metall oder einer Legierung mit geringer Elektronenaustrittsarbeit wie zum Beispiel Calcium, Aluminium, Barium, Ruthenium, Magnesium-Silber-Legierung, im Hochvakuum aufgedampft. Als Schutzschicht und zur Verringerung der Injektionsbarriere für Elektronen wird zwischen Kathode und E(T)L meistens eine sehr dünne Schicht aus Lithiumfluorid, Cäsiumfluorid oder Silber aufgedampft.

Die Elektronen werden nun von der Kathode injiziert, während die Anode die "Löcher", d.h. die positive Ladung bereitstellt. Loch und Elektron driften aufeinander zu und treffen sich im Idealfall in der EL, weshalb diese Schicht auch Rekombinationsschicht genannt wird. Elektronen und Löcher bilden einen gebundenen Zustand, den man als Exziton bezeichnet. Abhängig vom Mechanismus stellt das Exziton bereits den angeregten Zustand des Farbstoffmoleküls dar, oder der Zerfall des Exzitons stellt die Energie zur Anregung des Farbstoffmoleküls zur Verfügung. Dieser Farbstoff hat verschiedene Anregungszustände. Der angeregte Zustand kann in den Grundzustand übergehen und dabei ein Photon (Lichtteilchen) aussenden. Die Farbe des ausgesendeten Lichts hängt vom Energieabstand zwischen angeregtem und Grundzustand ab und kann durch Variation der Farbstoffmoleküle gezielt verändert werden. Ein Problem stellen nichtstrahlende Triplett-Zustände dar. Diese können durch Zugabe von sogenannten "Exzitoren" wieder gelöst werden.

Anstelle der Licht emittierenden Dioden können auch entsprechende Transistoren verwendet werden, die als LET oder OLET bezeichnet werden.

Die Lichtquellen werden auf einen geeigneten Träger aufgebracht oder darin eingesetzt. Dabei kommen vorzugsweise mehr als eine Lichtquelle zum Einsatz, beispielsweise 5, 10, 15, 20 oder bei Bedarf mehr, die entweder in Reihen oder Kreisen angeordnet sind. Über jede Lichtquelle wird eine der erfinderischen Linsen angebracht, wobei die Lichtquelle in die dafür vorgesehene Aussparung in der Linse eingepasst wird. Die Fixierung erfolgt durch Verkleben der Linse mit dem Träger, wobei der umlaufende Rand für einen besseren Halt sorgt und gleichzeitig das Eindringen von Feuchtigkeit verhindert. Vorzugsweise werden die Linsen mit der Einheit aus Träger und Lichtquelle mit Hilfe von Epoxidharz vergossen.

**BEISPIELE**

**Beispiele 1 bis 5**

Die Zusammensetzung verschiedener Gläser, die im Sinne der vorliegenden Erfindung zur Herstellung der optischen Linsen geeignet sind, sind in **Tabelle 1** wiedergegeben:

**Tabelle 1**

| Glaszusammensetzung | | | | | |
|---|---|---|---|---|---|
| **Komponente** | **1** | **2** | **3** | **4** | **5** |
| Siliziumdioxid | 60 | 55 | 50 | 50 | 50 |
| Titandioxid | 1 | 3 | 5 | 3 | 10 |
| Zirkondioxid | 1 | 2 | 5 | 5 | 2 |
| Calciumoxid | 10 | 10 | 10 | 12 | 10 |
| Magnesiumoxid | 3 | 5 | 13 | 3 | 10 |
| Zinkoxid | 3 | 5 | 5 | 6 | 5 |

(fortgesetzt)

| Glaszusammensetzung | | | | | |
|---|---|---|---|---|---|
| **Komponente** | **1** | **2** | **3** | **4** | **5** |
| Natriumoxid | 10 | 6 | 6 | 7 | 9 |
| Kaliumoxid | 10 | 12 | 3 | 7 | 2 |
| Lithiumoxid | 2 | 2 | 3 | 7 | 2 |

Beispiele 3 und 5 sind nicht Teil der Erfindung und sind nur als Referenz.

**Beispiel 6**

Die Beleuchtungseigenschaften einer Linse gemäß **Abbildung 3** wurde getestet. Dabei kam eine Glaszusammensetzung nach Beispiel 1 zum Einsatz, der Brechungsindex betrug 1,56. Die Linse besaß in x-Richtung eine Abmessung von 35 mm, in y-Richtung von 24 mm und in z-Richtung von 10 mm. Der Abstand von Lichteintritts- zur Lichtaustrittsfläche betrug 5,9 mm. Für diese Linse wurden gemäß den in DIN 67524-1 festgelegten Prüfverfahren folgende Messwerte bestimmt:

- Längsgleichmäßigkeit auf Fahrbahn und Tunnelwand $U_i$ : 0,8;

- Gleichmäßigkeit $U_0$ : 0,6;

- Blendung $T_i$ : 10;

- Mittlere Leuchtdichte an der Wand relativ zur mittleren Leuchtdichte auf der Fahrbahn : 74 %;

**Patentansprüche**

1. Optische Linse mit mindestens einer Lichtaustrittsfläche in ellipsoidartiger Freiform, wobei die Unterseiten planar ausgeformt und mit einer optisch relevanten Ausnehmung zur Aufnahme einer Lichtquelle versehen ist, **dadurch gekennzeichnet, dass** die Linse aus einem Glas (a) der folgenden Zusammensetzung:

   (a1) 55 bis 65 Gew.-% vierwertige Metalloxide
   (a2) 10 bis 23 Gew.-% zweiwertige Metalloxide
   (a3) 12 bis 22 Gew.-% einwertige Metalloxide und
   mit der Maßgabe, dass sich die Mengenangaben zu 100 Gew.-% ergänzen, sowie
   (b) einem Brechungsindex $n_D$ (gemessen bei 589 nm) von 1,5 bis 1,6 besteht.

2. Linse nach Anspruch 1, **dadurch gekennzeichnet, dass** die Lichtaustrittsflächen über ein, zwei, drei oder vier ellipsoidartige Freiformflächen verfügen.

3. Linse nach den Ansprüchen 1 und/oder 2, **dadurch gekennzeichnet, dass** sie in Richtung der optischen Achse eine Höhe von 9 bis 20 mm aufweist.

4. Linse nach mindestens einem der Ansprüche 1 bis 3, **dadurch gekennzeichnet, dass** sie einen Abstand der Lichteintritts- zur Lichtaustrittsfläche von 2 bis 10 mm aufweist.

5. Linse nach mindestens einem der Ansprüche 1 bis 4, **dadurch gekennzeichnet, dass** sie einen umlaufenden Rand oder Flansch aufweist.

6. Linse nach Anspruch 5, **dadurch gekennzeichnet, dass** der Flansch der Geometrie der Linse folgt.

7. Linse nach den Ansprüchen 5 und/oder 6, **dadurch gekennzeichnet, dass** der Flansch eine Positionierungshilfe trägt.

**8.** Linse nach mindestens einem der Ansprüche 1 bis 7, **dadurch gekennzeichnet, dass** das Glas vierwertige Metalloxide enthält, die ausgewählt sind aus der Gruppe, die gebildet wird von Siliziumdioxid, Titandioxid und Zirkondioxid sowie deren Mischungen.

**9.** Linse nach mindestens einem der Ansprüche 1 bis 8, **dadurch gekennzeichnet, dass** das Glas zweiwertige Metalloxide enthält, die ausgewählt sind aus der Gruppe, die gebildet wird von Calciumoxid, Magnesiumoxid und Zinkoxid sowie deren Mischungen.

**10.** Linse nach mindestens einem der Ansprüche 1 bis 9, **dadurch gekennzeichnet, dass** das Glas einwertige Metalloxide enthält, die ausgewählt sind aus der Gruppe, die gebildet wird von Natriumoxid, Kaliumoxid und Lithiumoxid sowie deren Mischungen.

**11.** Linse nach mindestens einem der Ansprüche 1 bis 10, **dadurch gekennzeichnet, dass** das Glas einen Brechungsindex $n_D$ von 1,55 bis 1,58 aufweist.

**12.** Linse nach mindestens einem der Ansprüche 1 bis 11, **dadurch gekennzeichnet, dass** das Glas eine Vickershärte von 600 bis 650 HV 0,1/20 aufweist.

**13.** Beleuchtungselement, umfassend oder bestehend aus einem Träger, mindestens einer Lichtquelle sowie mindestens einer Linse nach mindestens einem der Ansprüche 1 bis 12.

**14.** Beleuchtungselement nach Anspruch 13, **dadurch gekennzeichnet, dass** die Lichtquelle eine LED, eine OLED oder ein LET ist.

**15.** Verwendung der Linse nach Anspruch 1 und/oder des Beleuchtungselementes nach Anspruch 14 für Beleuchtungen in der Außenanwendung.

**Claims**

**1.** An optical lens having at least one light-emitting surface in an ellipsoid-like free shape, wherein the lower sides have planar shapes and are provided with an optically relevant recess for receiving a light source, **characterized in that** said lens consists of a glass (a) having the following composition:

  (a1) from 55 to 65% by weight of tetravalent metal oxides;
  (a2) from 10 to 23% by weight of divalent metal oxides;
  (a3) from 12 to 22% by weight of monovalent metal oxides; and
  with the proviso that the quantitative values add up to 100% by weight; and
  (b) a refractive index $n_D$ (measured at 589 nm) of from 1.5 to 1.6.

**2.** The lens according to claim 1, **characterized in that** the light-emitting surfaces are provided with one, two, three or four ellipsoid-like free shape surfaces.

**3.** The lens according to claims 1 and/or 2, **characterized by** having a height of from 9 to 20 mm in the direction of the optical axis.

**4.** The lens according to at least one of claims 1 to 3, **characterized by** having a distance of the light entry surface to the light-emitting surface of from 2 to 10 mm.

**5.** The lens according to at least one of claims 1 to 4, **characterized by** having a circumferential edge or flange.

**6.** The lens according to claim 5, **characterized in that** said flange follows the geometry of the lens.

**7.** The lens according to claims 5 and/or 6, **characterized in that** said flange bears a positioning aid.

**8.** The lens according to at least one of claims 1 to 7, **characterized in that** said glass contains tetravalent metal oxides selected from the group consisting of silicon dioxide, titanium dioxide and zirconium dioxide, and mixtures thereof.

9. The lens according to at least one of claims 1 to 8, **characterized in that** said glass contains divalent metal oxides selected from the group consisting of calcium oxide, magnesium oxide and zinc oxide, and mixtures thereof.

10. The lens according to at least one of claims 1 to 9, **characterized in that** said glass contains monovalent metal oxides selected from the group consisting of sodium oxide, potassium oxide and lithium oxide, and mixtures thereof.

11. The lens according to at least one of claims 1 to 10, **characterized in that** said glass has a refractive index $n_D$ of from 1.55 to 1.58.

12. The lens according to at least one of claims 1 to 11, **characterized in that** said glass has a Vickers hardness of from 600 to 650 HV 0.1/20.

13. A lighting element comprising or consisting of a support, at least one light source, and at least one lens according to at least one of claims 1 to 12.

14. The lighting element according to claim 13, **characterized in that** the light source is an LED, an OLED, or an LET.

15. Use of the lens according to claim 1 and/or the lighting element according to claim 14 for illumination in outdoor applications.


**Revendications**

1. Lentille optique avec au moins une surface de sortie de lumière à forme libre ellipsoïde, dans laquelle les parties inférieures présentent une forme plane et sont procurées d'une cavité optiquement pertinente pour recevoir une source de lumière, **caractérisée en ce que** ladite lentille consiste en un verre (a) avec la composition suivante :

   (a1) 55 à 65 % en poids d'oxydes de métaux tétravalents,
   (a2) 10 à 23 % en poids d'oxydes de métaux divalents,
   (a3) 12 à 22 % en poids d'oxydes de métaux monovalents,
   à condition que les indications qualitatives se complètent à 100 % en poids, et
   (b) avec un indice de réfraction $n_D$ (mesuré à 589 nm) de 1,5 à 1,6.

2. Lentille selon la revendication 1, **caractérisée en ce que** les surfaces de sortie de lumière possèdent une, deux, trois ou quatre surfaces à forme libre ellipsoïde.

3. Lentille selon les revendications 1 et/ou 2, **caractérisée en ce qu'**elle présente une hauteur de 9 à 20 mm dans la direction de l'axe optique.

4. Lentille selon l'une au moins des revendications 1 à 3, **caractérisée en ce qu'**elle présente une distance de la surface d'entrée de lumière à la surface de sortie de lumière de 2 à 10 mm.

5. Lentille selon l'une au moins des revendications 1 à 4, **caractérisée en ce qu'**elle présente un bord ou une bride périphérique.

6. Lentille selon la revendication 5, **caractérisée en ce que** ladite bride suit la géométrie de la lentille.

7. Lentille selon les revendications 5 et/ou 6, **caractérisée en ce que** ladite bride porte une aide de positionnement.

8. Lentille selon l'une au moins des revendications 1 à 7, **caractérisée en ce que** ledit verre contient des oxydes de métaux tétravalents choisis dans le groupe consistant en le dioxyde de silicium, le dioxyde de titane et le dioxyde de zirconium, et leurs mélanges.

9. Lentille selon l'une au moins des revendications 1 à 8, **caractérisée en ce que** ledit verre contient des oxydes de métaux divalents choisis dans le groupe consistant en l'oxyde de calcium, l'oxyde de magnésium et l'oxyde de zinc, et leurs mélanges.

10. Lentille selon l'une au moins des revendications 1 à 9, **caractérisée en ce que** ledit verre contient des oxydes de métaux monovalents choisis dans le groupe consistant en l'oxyde de sodium, l'oxyde de potassium et l'oxyde de lithium, et leurs mélanges.

11. Lentille selon l'une au moins des revendications 1 à 10, **caractérisée en ce que** ledit verre présente un indice de réfraction $n_D$ de 1,55 à 1,58.

12. Lentille selon l'une au moins des revendications 1 à 11, **caractérisée en ce que** ledit verre présente une dureté Vickers de 600 à 650 HV 0,1/20.

13. Elément d'éclairage comprenant ou consistant en un support, au moins une source de lumière, t au moins une lentille selon l'une au moins des revendications 1 à 12.

14. Elément d'éclairage selon la revendication 13, **caractérisée en ce que** ladite source de lumière est une LED, une OLED ou un LET.

15. Utilisation de la lentille selon la revendication 1 et/ou de l'élément d'éclairage selon la revendication 14 pour éclairages dans l'application extérieure.

**Abbildung 1**
Leuchtdichte als Funktion der Wegstrecke

**Abbildung 2a**
Linse mit einer Lichtaustrittsfläche in Form von zwei elliposidartigen Freiformen - Schnitt AA

**Abbildung 2b**
Linse mit einer Lichtaustrittsfläche in Form von zwei elliposidartigen Freiformen – Aufsicht

**Abbildung 2c**
Linse mit einer Lichtaustrittsfläche in Form von zwei elliposidartigen Freiformen – Schrägsicht

**Abbildung 3a**
Linse mit einer Lichtaustrittsfläche in Form von zwei elliposidartigen Freiformen - Schnitt AA

**Abbildung 3b**
Linse mit einer Lichtaustrittsfläche in Form von zwei elliposidartigen Freiformen – Aufsicht

**Abbildung 3c**
Linse mit einer Lichtaustrittsfläche in Form von zwei elliposidartigen Freiformen - Schrägsicht

**Abbildung 4a**
Linse mit einer Lichtaustrittsfläche in Form von zwei elliposidartigen Freiformen - Schnitt AA

**Abbildung 4b**
Linse mit einer Lichtaustrittsfläche in Form von zwei elliposidartigen Freiformen – Aufsicht

**Abbildung 4c**
Linse mit einer Lichtaustrittsfläche in Form von zwei elliposidartigen Freiformen - Schrägsicht

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 101308092 B1

- EP 1248129 B1